# EUROPEAN PATENT APPLICATION

(11) **EP 2 816 500 A1**
(43) Date of publication of application: **24.12.2014**
(21) Application number: 11877796.0
(22) Date of filing: 23.12.2011
(51) Int. Cl.: G06K 7/00, G06K 19/07

(54) **UNCOUPLING DEVICE AND METHOD**

(71) Applicant: Yudigar S.L.U., 50400 Cariñena (ES)
(72) Inventor: MARÍN VILLAMAYOR, Ignacio Gabriel, 50400 Cariñena (ES); GÓMEZ LATORRE, Lorena, 50400 Cariñena (ES)
(74) Representative: Santarelli
(86) International application number: PCT/ES2011/070900
(87) International publication number: WO 2013/093133

(57) **Abstract**

A device for uncoupling a security tag applied to an article includes a machine-readable identification tag, for sale in a commercial establishment. The uncoupling device can be connected to a processing device configured so that, once the sale transaction has been finalized, an activation signal is supplied to the uncoupling device in order to uncouple a security tag in the event of a positive correlation between an identification of the security tag read by an identification code reader device and an identification, retrieved by the processing device, corresponding to an identification of a machine-readable identification tag read by a device for reading machine-readable identification tags before the sale transaction has been finalized.

## Description

### SUBJECT OF THE INVENTION

The present invention relates to a device and method for uncoupling a security tag applied to an item or product after a sale transaction has been finalized.

### STATE OF THE ART

A system for uncoupling an EAS security hard tag is known in the state of the art, comprising identification of the radio frequency identification (RFID) type, after the sale of an item, for the purpose of avoiding activation of the security systems when a customer leaves the commercial establishment where he has purchased the product.

The system comprises an RFID reader positioned at a point of sale (POS), suitable for reading the identification of the RFID tag in order to identify the article the purchase of which is desired; a database connected to the RFID reader in order to verify that the article read is available for sale; an uncoupling device connected to the database, its operation being controlled by the database, such that the uncoupling device is activated only in order to uncouple the EAS hard tag if it is an article available for sale.

However, the uncoupling system does not provide for any kind of verification or correlation between the bar code of the product and the EAS security hard tag applied to the same product.

### SUMMARY

The present invention seeks to overcome one or more of the drawbacks set out above by means of a device for uncoupling a security tag applied to an article for sale in a commercial establishment.

One advantage is to provide a device for uncoupling security tags based on an association between a machine-readable identification tag and a security tag, both tags applied to an article included in the inventory of articles for sale in the commercial establishment; wherein the security tag can be uncoupled from the article after a sale transaction has been finalized and after the correlation between the security tag to be uncoupled and the identification tag has been verified; in the event that there is a positive match, an activation signal of the uncoupling device is generated, and finally, actual uncoupling of the correlated security tag exclusively applied to the article sold in the finalized sale transaction.

Another advantage is to provide a sale method comprising reading the machine-readable identification tag associated with a product available for sale, finalizing the sale transaction thereof, storing the identification of the readable identification tag that has been read, reading the identification of a security tag applied to the product sold, verifying the correlation between the stored readable identification tag and the security tag that has been read after the sale transaction has been finalized.

Yet another advantage is to provide a system for payment for an article included in an inventory of a commercial establishment and for uncoupling the security tag after finalizing the transaction of a sale in a self-semice system by the customer himself.

This method for the uncoupling of security tags applied to articles allows an operation with points of sale in a self-service system, with high security against theft and consequent reduction in security costs.

Yet another advantage is to provide a point of sale (POS) including a device for reading machine-readable identification tags of the linear bar code type, a code matrix including a plurality of rows and columns of codes, RFID identification, NFC identification; a device for reading RFID identification codes included in a security tag of the EAS security tag type; an uncoupling device for EAS security tags and an identification reader of the RFID type, near field communication (NFC) for said security tags, a processing device that can be connected to the tag reader device and to the code reader device, wherein the processor is suitable for verifying the correlation between a security tag associated with a verification tag, both applied to one and the same article after a sale transaction has been finalized; a security tag uncoupling device suitable for uncoupling a security tag in the event that the result of the verification step is positive; and a payment device.

Yet another advantage is that the method avoids the possibility of a false or incorrect identification tag applicable to an article with a different price being substituted for a genuine identification tag applied to a product, avoiding the need for the staff of the establishment to carry out verification directly or using cameras and moreover, that a removed security tag corresponds to an article paid for previously.

A further advantage of the method is that it allows the security tags to be reused after a sale transaction has been finalized, by applying the same tag afresh to a new product, said security tag being associated with the identification tag also applied to the same product.

By the term security tag is meant an anti-theft device, in general, for commercial establishments, composed of a security hard tag including identification of the RFID or NFC type that is applied to an article, included in an inventory, for sale in a commercial establishment. The article is protected by applying said security tag, which acts as an alarm being detected by security archways positioned at the exit of the commercial establishment and EAS security elements for the prevention of theft.

The security hard tags are produced in such a way that an uncoupling device is required in order to uncouple them from an object.

### DESCRIPTION OF AN EMBODIMENT

A point of sale of a commercial establishment comprises a device for reading machine-readable identification tags, of the scanner or RFID reader type; a device for reading identification codes of the radio frequency identification type (RFID), near field communication (NFC) type, included in security tags of the EAS security tag type; a processing device that can be connected to the tag reader device and to the code reader device; a security tag uncoupling device suitable for uncoupling a security tag; and a manual and/or automatic payment device using cash and/or a debit and/or credit card and/or other payment means of the portable device type, tablet, mobile phone, etc.

The machine-readable identification tags can be for example a linear bar code, a code matrix including a plurality of rows and columns of codes, a radio frequency identification (RFID) tag, etc. Each article has at least one readable identification tag applied thereto, applied to same at origin or at the establishment itself, and readable by a reader device suitable for reading the type of identification tag applied, for example, a bar code can be read by means of a scanner.

Similarly, each article also has a security tag applied, comprising a radio frequency identification (RFID) circuit, so that the two tags can be matched together, each pair of tags formed being storable in a mass storage memory of the database type.

Carrying out a positive sale transaction at a point of sale (POS) involves reading the identification tag of the article by means of the corresponding reader device in order to identify the type of product and its price; next the purchase is paid for at the payment device, which finalizes the sale transaction.

The device for reading identification tags can be connected to a processing device that can, in turn, be connected to the database, so that when an identification tag is read by the identification tag reader device it transmits an electrical signal corresponding to the read identification tag to the processor and, in response to the received signal, the processor retrieves from the database the identification of the security tag associated with the read identification tag.

Once the sale transaction has been finalized, the security tag is brought close to the radio frequency identification (RFID) code reader device in order to then read the identification of the security tag of an article that has been sold.

If the identification reader performs a positive reading of the security tag, the reader is configured to transmit an electrical signal corresponding to the identification of the read security tag to the processor and, in response to the received signal, the processor performs a verification of the correlation between the identification of the read security tag and the identification of the security tag retrieved from the database, corresponding to one of the identification tags previously read, before the sale transaction has been finalized.

In a scenario in which there is a positive match between the retrieved and the read identification corresponding to the security tag, the processor supplies an activation signal to an uncoupling device in order to uncouple said security tag applied to the sold article, and no other.

However, in a scenario in which there is no positive match between the retrieved and the read identification, the processor is prevented from supplying an activation signal to an uncoupling device, so that the security tag applied to the article and read by the RFID reader cannot be uncoupled. The POS (point of sale) includes an alarm device suitable for emitting a warning signal to the staff of the establishment, of the type using a light signal, audible signal etc.

It should be noted that a security tag can be applied to an article before reaching a commercial establishment and/or once the article is located within said commercial establishment. In this last scenario, the security tags can be reused and must be associated with the identification tag corresponding to the article to which the reused security tag is applied each time and furthermore, the new association or pair of tags formed must be entered into the database.

In a scenario in which the payment for articles sold in a commercial establishment takes place at a point of sale in a self-service system, the use of the method for uncoupling a security tag, the RFID identification code of which matches an identification code associated with an identification tag applied to an article, included in a previously finalized sale transaction, avoids the possibility that the customer can uncouple a security tag from an article the identification tag of which has not been read and therefore, paid for. Furthermore, exchanging identification tags between products of a different price is also avoided.

Also, in a scenario in which the machine-readable identification tags and the identification codes are of the same radio frequency identification type, the machine-readable identification tag reader device and the identification code reader device can be one and the same.

Also, errors are avoided on the part of the staff at the establishment who accept payment , such as charging for one article but removing the security tag applied to a product that has not been invoiced.

The method for uncoupling a security tag can be carried out by a computer, loadable into an internal memory of a computer with input and output units, and also with processor units.

To this end the computer program comprises codes configured to execute the steps of the aforesaid method when it is executed by the computer. Furthermore, the executable code can be recorded in a readable carrier medium within a computer.

## Claims

1. **An uncoupling device** for a security tag applied to an article, including a machine-readable identification tag, for sale in a commercial establishment; **characterized in that** the uncoupling device can be connected to a processing device configured so that, once the sale transaction has been finalized, an activation signal is supplied to the uncoupling device in order to uncouple a security tag in the event of a positive correlation between an identification of the security tag read by an identification code reader device and an identification, retrieved by the processing device, corresponding to an identification of a machine-readable identification tag read by a device for reading machine-readable identification tags before the sale transaction has been finalized.

2. **Device** according to claim 1; wherein the machine-readable identification tag reader device is of the scanner, RFID reader, NFC reader type.

3. **Device** according to claim 2; wherein the machine-readable identification tag is of the linear bar code, code matrix including a plurality of rows and columns of codes, identification by RFID, near field communication (NFC) type.

4. **Device** according to claim 1; wherein the identification code reader device is suitable for reading security tags of the electronic article surveillance (EAS) type, including RFID, near field communication (NFC).

5. **Device** according to claim 1; wherein the article including the machine-readable identification tag can be matched exclusively with a security tag, each pair formed being storable in a mass storage memory.

6. **Device** according to claim 5; wherein the processing device retrieves from the mass storage memory the identification of the security tag associated with the machine-readable identification tag read by the identification tag reader device.

7. **A point of sale** wherein a sale transaction for an article available for sale in a commercial establishment can be finalized; wherein the point of sale of a commercial establishment comprises a machine-readable identification tag reader device, a security tag identification code reader device, a processing device that can be connected to the tag reader device and to the code reader device, a device for uncoupling security tags and a device for manual and/or automatic payment in cash and/or with a debit and/or credit card and/or by other payment means of the portable device type, tablet, mobile phone, etc.; wherein the uncoupling device can be connected to a processing device configured so that, once a sale transaction has been finalized, an activation signal is supplied to the uncoupling device in order to uncouple the security tag in the event of a positive correlation between an identification of the security tag read by an identification code reader device and an identification, retrieved by the processing device, corresponding to an identification of a security tag associated with the machine-readable identification tag read by a machine-readable identification tag reader device before the sale transaction has been finalized.

8. **Point of sale** according to claim 7; wherein the point of sale can be operated in a self-service system by a customer of the commercial establishment.

9. **Point of sale** according to claim 7; wherein the point of sale includes an alarm device suitable for emitting a warning signal to the staff of the establishment, indicating that there is no positive match between the retrieved and the read identification; the processor being prevented from supplying the signal to activate the uncoupling device.

10. **Point of sale** according to claim 7; wherein the alarm device is suitable for emitting a warning signal of the type using a light signal, audible signal etc.

11. **A method** for uncoupling a security tag applied to an article, including a machine-readable identification tag, for sale in a commercial establishment; **characterized in that** the method includes the steps of:
• Uncoupling a security tag by means of an uncoupling device in response to the receipt by the same uncoupling device of an activation signal supplied from a processing device, once the sale transaction has been finalized, and, in the event of a positive correlation between an identification of the security tag read by an identification reader device and an identification, retrieved by the processing device, corresponding to a security tag associated with the machine-readable identification tag read by a machine-readable identification tag reader device before the sale transaction has been finalized.

12. **Method** according to claim 11; wherein the method further comprises a step of exclusively matching the machine-readable identification tag with the identification of a security tag, each unique pair formed being storable in a mass storage memory.

13. **Method** according to claim 12; wherein the method further comprises a step of emitting a warning signal in the event that there is no correlation between the identification of the security tag read by the identification reader device and the identification retrieved by the processing device, corresponding to the security tag associated with the machine-readable identification tag read before the sale transaction has been finalized.

14. **Method** according to claim 13; wherein the method further comprises a step in which no activation signal is supplied in the event that there is no correlation between the identification of the security tag read by the identification reader device and the identification retrieved by the processing device.

15. **A computer program** that can be loaded in an internal memory of a computer with input and output of the units and a processing unit, when the program consists of executable code configured so as to carry out the necessary steps for any of claims 12 to 15 when executed in the computer.

16. **The computer program** of claim 15, that can be recorded in a readable medium in a computer.
